(19) **Europäisches Patentamt**
European Patent Office
Office européen des brevets

(11) **EP 2 225 549 B1**

(12) **EUROPÄISCHE PATENTSCHRIFT**

(45) Veröffentlichungstag und Bekanntmachung des Hinweises auf die Patenterteilung:
**07.03.2012 Patentblatt 2012/10**

(21) Anmeldenummer: **09741826.3**

(22) Anmeldetag: **28.04.2009**

(51) Int Cl.:
*G01N 21/64* (2006.01)  *G02B 21/06* (2006.01)
*G02B 27/56* (2006.01)  *G01Q 60/20* (2010.01)
*G01Q 60/22* (2010.01)

(86) Internationale Anmeldenummer:
**PCT/EP2009/003056**

(87) Internationale Veröffentlichungsnummer:
**WO 2009/135607 (12.11.2009 Gazette 2009/46)**

(54) **VORRICHTUNG UND VERFAHREN ZUM EVANESZENTEN BELEUCHTEN EINER PROBE**

DEVICE AND METHOD FOR THE EVANESCENT ILLUMINATION OF A SAMPLE

DISPOSITIF ET PROCÉDÉ D'ÉCLAIRAGE ÉVANESCENT D'UN ÉCHANTILLON

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **07.05.2008 DE 102008022493**

(43) Veröffentlichungstag der Anmeldung:
**08.09.2010 Patentblatt 2010/36**

(73) Patentinhaber: **Carl Zeiss MicroImaging GmbH 07740 Jena (DE)**

(72) Erfinder:
• **MATTHÄ, Manfred**
  **07747 Jena (DE)**
• **VENUS, Bruene**
  **37085 Göttingen (DE)**

(74) Vertreter: **Geyer, Fehners & Partner Patentanwälte Perhamerstrasse 31 80687 München (DE)**

(56) Entgegenhaltungen:
**WO-A-2008/009581      US-A1- 2004 174 523**
**US-A1- 2005 179 903**

## Beschreibung

Die Erfindung betrifft eine Vorrichtung zum evaneszenten Beleuchten einer Probe gemäß dem Oberbegriff des Anspruches 1 und ein Verfahren zum evaneszenten Beleuchten einer Probe gemäß dem Oberbegriff des Anspruches 4.

Eine solche Vorrichtung und ein solches Verfahren sind aus der US 2004/0174523 A bekannt.

Bei dem evaneszenten Beleuchten einer Probe wird das Strahlenbündel zur Beleuchtung der Probe so zugeführt, daß an der Grenzfläche zur Probe eine Totalreflexion auftritt. Dadurch wird in der Probe eine stehende evaneszente Welle ausgebildet, deren Intensität exponentiell mit dem Abstand zur Grenzfläche abfällt

Der Abstand, bei dem die Intensität auf den 1/e-ten Anteil abgefallen ist, kann als Abstand definiert werden, der die Eindringtiefe der evaneszenten Welle beschreibt. Typische Werte liegen im Bereich von 100-200 nm.

Die evaneszente Strahlung wird z.B. zur Anregung von Fluoreszenz in der Probe eingesetzt. Die angeregte Fluoreszenzstrahlung kann dann mittels eines Mikroskops detektiert werden.

Immer öfters sollen mehrere Fluoreszenzen mit unterschiedlichen Wellenlängen angeregt werden. Dies soll natürlich unter möglichst gleichen Bedingungen erfolgen, damit die einzelnen Fluoreszenzbilder aussagekräftig sind und miteinander kombiniert bzw. quantitativ miteinander verglichen werden können. Dabei tritt die Schwierigkeit auf, daß die Eindringtiefe von der Wellenlänge und dem Einfallswinkel abhängt. Bei gleichem Einfallswinkel sind die Eindringtiefen für verschiedene Wellenlängen unterschiedlich groß.

Die WO 2008/009581 A1 beschreibt ein Mikroskop zur TIRF-Mikroskopie mit einer Mehrfarben-Lichtquelle zur evaneszenten Beleuchtung einer Probe mit einem Beleuchtungsstrahl, mit einer Wellenlängenselektionseinrichtung zur variablen Auswahl einer Hauptwellenlänge des Beleuchtungsstrahls und mit einer Ablenkeinrichtung zur variablen Beeinflussung des Beleuchtungsstrahls, wobei die Ablenkeinrichtung zur Veränderung des Einfallswinkels des Beleuchtungsstrahlengangs zur Probe vorgesehen ist. Ferner umfaßt das Mikroskop eine Steuereinheit, die die Ablenkeinrichtung in Abhängigkeit von der durch die Wellenlängenselektionseinrichtung ausgewählten Wellenlängen derart regelt, daß die Eindringtiefe des evaneszenten Feldes in die Probe konstant bleibt.

Die US 2005/0179903 A1 beschreibt ein Mikroskop zum evaneszenten Beleuchten einer Probe, mit einer Lichtquelle, die Laserstrahlung mit verschiedenen Wellenlängen erzeugt, einem optischen Fokussystem, das die Laserstrahlung unter einem vorbestimmten Einfallswinkel auf die Probe richtet, um die evaneszente Beleuchtung zu erzeugen, einer Fluoreszenzbeobachtungseinheit, die die aufgrund der evaneszenten Beleuchtung erzeugte Fluoreszenz beobachtet, einer Einheit zum Einstellen des Einfallswinkels der Laserstrahlung auf die Probe und einer Steuereinheit, die den Einfallswinkel derart einstellt, daß die Eindringtiefe der evaneszenten Beleuchtung gleich bleibt, wenn die Wellenlänge der Laserstrahlung geändert wird.

Ausgehend hiervon ist es Aufgabe der vorliegenden Erfindung, eine Vorrichtung zum evaneszenten Beleuchten einer Probe der eingangs genannten Art so weiterzubilden, daß die wellenlängenbedingten Unterschiede der Eindringtiefen verringert sind. Ferner soll das Verfahren zum evaneszenten Beleuchten einer Probe der eingangs genannten Art so verbessert werden, daß die wellenlängenbedingten Unterschiede der Eindringtiefen verringert sind.

Die Aufgabe wird bei einer Vorrichtung zum evaneszenten Beleuchten einer Probe der eingangs genannten Art dadurch gelöst, daß die Korrekturoptik zumindest ein refraktives Element in Form einer Linse zur Erzeugung des Farbquerfehlers aufweist und daß eine Zuführeinheit vorgesehen ist, die das Strahlenbündel der Korrekturoptik außeraxial zuführt.

Damit kann eine besonders gute Verringerung der wellenlängenbedingten Unterschiede der Eindringtiefen der Strahlung in die Probe bei der evaneszenten Beleuchtung erreicht werden. Gleichzeitig ist ein einfacher Aufbau möglich, da die Linse zur Erzeugung des Farbquerfehlers nicht schräg gestellt werden muß. Der Farbquerfehler wird bereits durch das außeraxiale Durchlaufen der Linse erreicht.

Mit der erfindungsgemäßen Vorrichtung kann somit die Probe gleichzeitig mit der optischen Strahlung mit mindestens zwei verschiedenen Wellenlängen bzw. mit Strahlenbüscheln mit zwei verschiedenen Wellenlängen beleuchtet werden, was z.B. bei Fluoreszenzuntersuchungen von Vorteil ist. So können die Unterschiede der Eindringtiefen deutlich verringert werden, wodurch z.B. multispektrale Bilder aus simultan oder sequentiell durchgeführten Frequenzanregungen auswertbar sind.

Mit der erfindungsgemäßen Vorrichtung werden somit die spektralen Eindringtiefen bei der evaneszenten Beleuchtung vereinheitlicht. Damit ist es vorteilhafter Weise nicht mehr notwendig, eine Stelloption zur Angleichung der spektralen Eindringtiefen bei der Vorrichtung vorzusehen.

Bei der erfindungsgemäßen Vorrichtung wird vorteilhaft ausgenutzt, daß die Höhe in der Objektivpupille den Beleuchtungswinkel und damit die Eindringtiefe beim evaneszenten Beleuchten beeinflußt. Dies wird erfindungsgemäß durch die gewollte chromatische Vergrößerungsdifferenz der Korrekturoptik in der Art genutzt, daß die notwendigen wellenlängenabhängigen Höhen in der Objektivpupille vorliegen, um gleiche Eindringtiefen beim evaneszenten Beleuchten zu erreichen.

Durch die erfindungsgemäße Vorrichtung können z. B. bei Experimenten, in denen unterschiedliche Fluorophore oder Farbstoffe mit unterschiedlichen Wellenlängen simultan oder sequentiell angeregt werden sollen, die Messungen bzw. Untersuchungen mit deutlich höherer Frequenz durchgeführt werden, da keine mechanischen Elemente zwischen zwei Untersuchungen (z.B. Aufnahmen) mehr bewegt werden müssen, wie dies bisher üblich war, um zu gleichen Eindringtiefen bzw. zum gleichen Anregungsvolumen zu gelangen.

Der durch die Korrekturoptik bedingte Farbquerfehler kann insbesondere auch unter Berücksichtigung des Abbildungsmaßstabes des Objektives gewählt sein. Sollte das Objektiv einen chromatischen Fehler bei der Beleuchtung aufweisen, kann diese bei der Wahl des Farbquerfehlers bzw. der chromatischen Vergrößerungsdifferenz der Korrekturoptik berücksichtigt werden.

Die Korrekturoptik kann eine zur Objektivpupille konjugierte Ebene aufweisen, durch die das zugeführte Strahlenbündel läuft. Insbesondere läuft das zugeführte Strahlenbündel parallel zur optischen Achse der Korrekturoptik durch die konjugierte Ebene. In diesem Fall ist die Ausbildung der Korrekturoptik einfach möglich.

Ferner kann das Strahlenbündel diese Ebene außeraxial in einem Abstand und unter einem Winkel durchlaufen, wie er dem in der Objektivpupille benötigten Hauptstrahlverlauf entspricht. In dieser Ebene kann z.B. innerhalb einer optischen Faser Licht unterschiedlicher Wellenlängen zugeführt werden, welches erfindungsgemäß in die Objektivpupille mit dem definierten Farbquerfehler abgebildet wird, womit die spektralen Unterschiede in den Eindringtiefen gezielt verringert werden.

Die Zuführeinheit führt das Strahlenbündel der Korrekturoptik außeraxial zu und kann ferner das Strahlenbündel der Korrekturoptik so zuführen, daß es nicht parallel zur optischen Achse der Korrekturoptik verläuft. Die Zuführeinheit kann beispielsweise eine Lichtleitfaser umfassen, deren Faserende so positioniert ist, daß die gewünschte Zuführung des Strahlenbündels verwirklicht wird. Natürlich kann die Zuführeinheit auch andere optische Elemente wie Strahlteiler, Linsen, Gitter, ... enthalten.

Bei dem zugeführten Strahlenbündel sind die Strahlenbüschel mit den verschiedenen Wellenlängen insbesondere koaxial zueinander enthalten. Dies vereinfacht die Auslegung der Korrekturoptik.

Die erfindungsgemäße Vorrichtung zum evaneszenten Beleuchten einer Probe kann ferner ein Stellelement, das z.B. Teil der Zuführeinheit sein kann, aufweisen, mit der die Position und/oder der Winkel des Strahlenbündels, in der bzw. unter dem es die konjugierte Ebene durchläuft, eingestellt werden kann. Insbesondere kann der Abstand des Strahlenbündels zur optischen Achse der Korrekturoptik verändert werden. Damit ist es möglich, die Eindringtiefe für alle Wellenlängen gleichzeitig zu verstellen.

Das Stellelement kann auch so ausgebildet sein, daß damit alle wellenlängenabhängigen Höhen in der Objektivpupille gleichzeitig verändert werden. Die Veränderung wird dabei bevorzugt so bewirkt, daß die Eindringtiefe wellenlängenunabhängig verändert wird. Es kann auch eine geringe wellenlängenabhängige Änderung der spektralen Eindringtiefen bei Veränderung der Eindringtiefe mittels des Stellelementes auftreten. Der verbleibende Unterschied ist aber um mindestens eine Größenordnung geringer im Vergleich zu dem nicht korrigierten Fall.

Wenn das zugeführte Strahlenbündel zwei oder mehr Strahlenbüschel mit verschiedenen Wellenlängen enthält, können die wellenlängenbedingten Unterschiede der Eindringtiefen minimiert werden. Insbesondere ist es möglich, daß die Eindringtiefen für zwei, drei oder mehr Wellenlängen gleich sind. Bei dazwischen liegenden Wellenlängen ist eine deutliche Verringerung im Vergleich zu dem Fall möglich, bei dem keinerlei Korrektur der Eindringtiefen durchgeführt wird. Der verbleibende Unterschied kann um eine oder mehrere Größenordnungen geringer sein im Vergleich zu dem nicht korrigierten Fall.

Bei mehr als zwei oder drei unterschiedlichen Wellenlängen kann die Korrekturoptik z.B. so ausgelegt sein, daß die spektralen Unterschiede für alle Wellenlängen minimiert sind. Z.B. kann gefordert sein, daß der spektrale Unterschied einen vorgegebenen Grenzwert für keine der Wellenlängen überschreitet. Es ist auch jede andere Art der Minimierung möglich.

Unter optischer Strahlung bzw. optischen Strahlenbüscheln wird hier insbesondere elektromagnetische Strahlung verstanden, die sich gemäß den optischen Gesetzen verhält. Insbesondere handelt es sich um Strahlung aus dem sichtbaren Wellenlängenbereich. Es ist jedoch auch Strahlung aus dem Infrarotbereich oder dem UV-Bereich möglich.

Die erfindungsgemäße Vorrichtung zum evaneszenten Beleuchten einer Probe kann Bestandteil eines Mikroskops sein. In diesem Fall wird ein Mikroskop bereitgestellt, das die Probe evaneszent so beleuchten kann, daß wellenlängenbedingte Unterschiede der Eindringtiefen der Strahlung in die Probe verringert ist.

Die Korrekturoptik kann in diesem Fall beispielsweise einen Teil der Beleuchtungsoptik des Mikroskops nutzen. So kann die Korrekturoptik beispielsweise einen Teil der dem Objektiv nachgeordneten Auflichtbeleuchtung enthalten. In diesem Fall enthält die Korrekturoptik beispielsweise ein Korrekturmodul, das dem Mikroskop hinzugefügt werden kann und das zusammen mit dem Teil der Beleuchtungsoptik die erfindungsgemäße Korrekturoptik verwirklicht. In diesem Fall ist das Korrekturmodul dann bevorzugt so ausgelegt, daß zusammen mit dem Teil der genutzten Beleuchtungsoptik der gewünschte Farbquerfehler der Korrekturoptik verwirklicht wird.

Wenn mit einem solchen Mikroskop Fluoreszenzstralung detektiert wird, wird es häufig auch als TIRF-Mikroskop (TIRF = Total Internal Reflection Fluorescence = Fluoreszenz bei interner Totalreflexion) bezeichnet. Bei einem TIRF-Mikroskop wird die aus der Epi-Fluoreszenz bekannte Hintergrundfluoreszenz deutlich reduziert und der Bildkontrast erheblich verbessert. Resultat ist eine entsprechend hohe Z-Auflösung. Das evaneszente Feld ist typischerweise 100-200 nm dick.

Mit der erfindungsgemäßen Vorrichtung wird es möglich, bei einem TIRF-Mikroskop und -Verfahren mit mehreren unterschiedlichen Wellenlängen die spektralen Anregungsvolumina zu optimieren, um durch die Nutzung der mehreren Wellenlängen brillantere und bessere TIRF Farbbilder zu erhalten.

Aufgrund des bildgebenden Prinzips eignet sich dieses Beleuchtungsverfahren der erfindungsgemäßen Vorrichtung speziell zur Untersuchung dynamischer Prozesse im Umfeld der Zellmembran und zur Untersuchung von Molekül-Molekül Interaktionen im zellfreien System. Des weiteren wird auch die Kombination von elektrophysiologischen bzw. pharmakologischen Experimenten (Manipulation der Probe) eine große Rolle spielen, da die TIRF-Mikroskopie in der Lage ist, Bilder zu liefern, wo bislang nur indirekte Messungen möglich waren.

Die erfindungsgemäße Vorrichtung zum evaneszenten Beleuchten einer Probe kann ferner eine Quelle zur Erzeugung des Strahlenbündels aufweisen. Bei der Strahlung kann es sich insbesondere um LaserStrahlung handeln.

Die erfindungsgemäße Vorrichtung zum evaneszenten Beleuchten einer Probe bzw. das Mikroskop mit einer solchen Vorrichtung kann eine dem Fachmann bekannte Steuereinrichtung enthalten. Insbesondere kann das Mikroskop in üblicher Art und Weise ausgebildet sein.

Die Aufgabe wird bei einem Verfahren zum evaneszenten Beleuchten einer Probe der eingangs genannten Art dadurch gelöst, daß die Korrekturoptik mit zumindest einem refraktiven Element in Form einer Linse zur Erzeugung des Farbquerfehlers vorgesehen wird und daß das Strahlenbündel der Korrekturoptik außeraxial zugeführt wird.

Dadurch wird eine besonders gute Verringerung der wellenlängenbedingten Unterschiede der Eindringtiefen der Strahlung in die Probe bei der evaneszenten Beleuchtung erreicht. Die Probe kann somit gleichzeitig mit unterschiedlichen Wellenlängen evaneszent beleuchtet werden und es sichergestellt, daß sich die Eindringtiefen nur gering unterscheiden. Insbesondere können die Eindringtiefen gleich sein.

Mit dem erfindungsgemäßen Verfahren lassen sich hervorragend gleiche Beleuchtungsbedingungen mit verschiedenen Wellenlängen erreichen.

Insbesondere kann die Korrekturoptik eine zur Objektivpupille konjugierte Ebene aufweisen, durch die das zugeführte Strahlenbündel läuft. Bevorzugt durchläuft das Strahlenbündel die konjugierte Ebene als koaxiales Strahlenbündel für die verschiedenen Wellenlängen.

Bei dem Verfahren wird die Probe bevorzugt mit der optischen Strahlung mit verschiedenen Wellenlängen gleichzeitig beleuchtet.

Bei dem Verfahren wird das Strahlenbündel der Korrekturoptik außeraxial zugeführt und kann ferner das Strahlenbündel der Korrekturoptik noch so zugeführt werden, daß es nicht parallel zur optischen Achse der Korrekturoptik verläuft. Damit kann der Farbquerfehler der Korrekturoptik gezielt dazu genutzt werden, daß die unterschiedlichen Wellenlängen die Objektivpupille in den gewünschten unterschiedlichen Höhen durchlaufen.

Das erfindungsgemäße Beleuchtungsverfahren kann bei mikroskopischen Untersuchungen eingesetzt werden. Somit wird auch ein entsprechendes Mikroskopierverfahren, z.B. ein TIRF-Mikroskopierverfahren, bereitgestellt. Das Mikroskopierverfahren kann in der dem Fachmann bekannten Weise weitergebildet werden.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig. 1    eine schematische Ansicht einer Ausführungsform der erfindungsgemäßen Vorrichtung zum evaneszenten Beleuchten einer Probe;

Fig. 2    eine vergrößerte Ansicht des Objektivs 4 mit Probe 11 von Fig. 1;

Fig. 3    ein Diagramm zur Erläuterung der vorliegenden Eindringtiefen bei den Ausführungsformen von Fig. 1; 2.

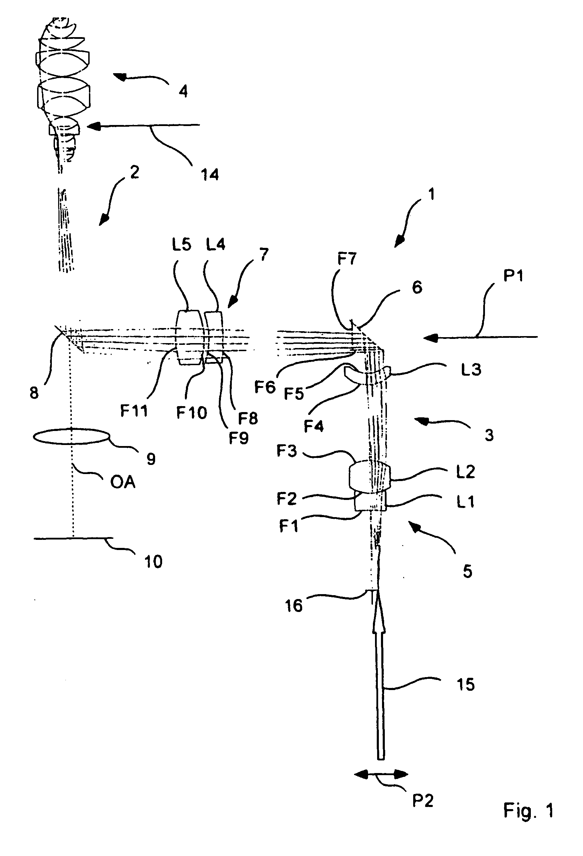

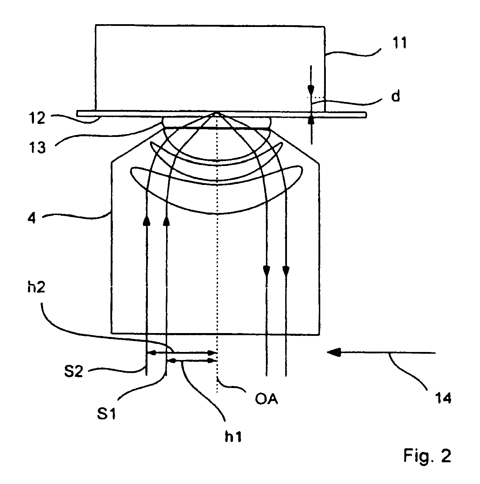

Bei der in Fig. 1 und 2 gezeigten Ausführungsform ist die erfindungsgemäße Vorrichtung 1 zum evaneszenten Beleuchten einer Probe in ein Mikroskop 2 integriert und umfaßt eine Korrekturoptik 3 und ein der Korrekturoptik 3 nachgeordnetes Objektiv 4.

Die Korrekturoptik 3 weist eine Korrektureinheit 5 mit drei Linsen L1, L2 und L3, ein nachgeordnetes Umlenkprisma 6, eine Auflichtoptik 7 mit zwei Linsen L4 und L5 sowie einen Umlenkspiegel 8 auf.

Die Auflichtoptik 7 kann Bestandteil einer herkömmlichen Auflichtbeleuchtung für das Mikroskop 2 sein. Weitere Elemente der Auflichtbeleuchtung sind zur Vereinfachung der Darstellung hier nicht eingezeichnet. Das Licht für die Auflichtbeleuchtung würde aus der durch den Pfeil P1 angedeuteten Richtung, wenn das Prisma 6 entfernt wäre, auf die Auflichtoptik 7 treffen und dann über den Umlenkspiegel 8 in den Mikroskopstrahlengang eingekoppelt werden. Der Umlenkspiegel 8 kann als teiltransparenter Umlenkspiegel und/oder dichroitischer Umlenkspiegel (je nach Anwendung) ausgebildet sein.

Das Mikroskop 2 kann ferner, wie schematisch angedeutet ist, eine Tubusoptik 9 und einen Bildsensor 10 aufweisen.

Bei der Ausführungsform von Fig. 1 und 2 wird eine evaneszente Beleuchtung der Probe 11 mit Strahlung 15 mit den Wellenlängen von 450 und 575 nm so durchgeführt, daß die Eindringtiefen unabhängig von den beiden Wellenlängen jeweils 93 nm beträgt. Das zugeführte Strahlenbündel 15 ist in Fig. 1 durch einen Pfeil dargestellt. Die Pfeilspitze liegt in einer Ebene 16 und kann beispielsweise das Faserende sein, aus der die Strahlung 15 austritt.

Die Korrekturoptik 3 ist hier so ausgebildet, daß die Ebene 16 eine konjugierte Ebene zur Austrittspupille 14, deren Lage in Fig. 1 durch den Pfeil 14 angedeutet ist, des Objektives 4 ist. Ferner weist die Korrekturoptik 3 einen Farbquerfehler auf, der so ausgelegt ist, daß dadurch die wellenlängenabhängigen Unterschiede der Eindringtiefe d (Fig. 2) bei der evaneszenten Beleuchtung der zu untersuchenden Probe 11 für die beiden Wellenlängen 450 nm und 575 nm kompensiert sind.

Um nun für die beiden Wellenlängen 450 nm und 575 nm die gleiche vorgegebene Eindringtiefe d von 93 nm zu erreichen, ist die Korrektureinheit 5 der Korrekturoptik 3 so ausgebildet, daß sie einen starken Farbquerfehler aufweist. Der Farbquerfehler ist dabei so gewählt, daß die optische Strahlung bzw. das optische Strahlenbüschel S1 mit der Wellenlänge von 450 nm die detektionsseitige Pupille 14 des Objektives 4 in geringerer Höhe h1 (Abstand zur optischen Achse OA) durchläuft als die optische Strahlung S2 mit der Wellenlänge von 575 nm, wie dies schematisch in Fig. 2 angedeutet ist. Die unterschiedlichen Höhen h1, h2 (Abständen zur optischen Achse OA) sind dabei durch die Korrektureinheit 5 so vorgegeben, daß aufgrund der daraus resultierenden unterschiedlichen Einfallswinkel der Strahlung S1, S2 auf die Probe 11 die Eindringtiefe d für beide Wellenlängen jeweils 93 nm beträgt.

Die Korrektureinheit 5 wird in Abhängigkeit der Höhen h ausgelegt, die ausgehend von der gewünschten Eindringtiefe d wie folgt berechnet werden können.

Die Eindringtiefe d läßt sich gemäß der nachfolgenden Formel 1 darstellen:

$$d = \frac{\lambda}{4\pi n_2 \sqrt{(\sin\alpha / \sin\alpha_g)^2 - 1}} \tag{1}$$

Dabei steht $\lambda$ für die Wellenlänge der verwendeten optischen Strahlung, $\alpha$ für den vorliegenden Einstrahlwinkel, $\alpha_g$ für den Grenzeinstrahlwinkel für den Übergang zur Totalreflexion und $n_2$ für die Brechzahl der Probe (also des Mediums, das in evaneszenter Weise beleuchtet wird).

Der Grenzwinkel $\alpha_g$ der Totalreflexion läßt sich gemäß nachfolgender Formel 2 darstellen:

$$\sin\alpha_g = \frac{n_2}{n_1} \tag{2}$$

wobei $n_1$ de Brechzahl des Deckglases 12 ist.

Verknüpft man die Formel 1 und 2 läßt sich die Eindringtiefe der evaneszenten Welle in die Probe 11 wie folgt darstellen:

$$d = \frac{\lambda}{4\pi \sqrt{n_1^2 \sin^2\alpha - n_2^2}} \tag{3}.$$

Soll die Eindringtiefe d für unterschiedliche Wellenlängen gleich sein, so kann aus der Formel 3 gefordert werden, daß der nachfolgende Ausdruck konstant sein muß.

$$\frac{n_1^2 \sin^2\alpha - n_2^2}{\lambda^2} \tag{4}.$$

Der Wert $n_1 \cdot \sin\alpha$ entspricht der objektseitigen Apertur im Objektiv 4. Unter Einbeziehung der Sinusbedingung bei unendlicher Bildweite ergibt sich daraus die Formel

$$h = (n_1 \sin \alpha) f \qquad (5)$$

wobei h die Höhe des entsprechenden Aperturstrahls in der Austrittspupille 14 des Objektives 4 und f die Brennweite des Objektives 4 ist.

Aus der Formel 3 lassen sich für eine festgelegte bzw. gewünschte Eindringtiefe d die erforderlichen objektseitigen Aperturen ($n_1 \sin \alpha$) für die einzelnen Wellenlängen berechnen. Aus der Formel 5 ergeben sich dann die wellenlängenabhängigen Höhen h für die Lichteinstrahlung in die Austrittspupille 14 des Objektives 4. Wenn die wellenlängenabhängigen Höhen h bekannt sind, kann der durch die Korrektureinheit 5 verursachte chromatische Vergrößerungsfehler so ausgelegt werden, daß die optischen Strahlen S1, S2 mit den verschiedenen Wellenlängen des der Korrektureinheit 5 zugeführten Strahlenbündels 15 die Austrittspupille 14 in den berechneten Höhen h durchlaufen.

Ferner kann bei der Vorrichtung von Fig. 1 der axiale Abstand des Strahlenbündels 15 zur optischen Achse der Korrekturoptik 3 verändert werden, wie durch den Doppelpfeil P2 angedeutet ist. Über diese Abstandsänderung kann die Eindringtiefe variiert werden. Die Abstandsänderung kann insbesondere über einen (nicht gezeigten) Aktuator erfolgen.

Wenn die Eindringtiefe in dieser Art und Weise auf einen anderen Wert als die hier angenommenen 93 nm eingestellt wird, wird mittels der Korrektureinheit 5 immer noch eine Verringerung der unterschiedlichen wellenlängenabhängigen Eindringtiefen erreicht. Es kann jedoch sein, daß die Eindringtiefen nicht mehr völlig gleich sind. Jedoch ist der Unterschied der Eindringtiefen deutlich geringer im Vergleich zu einem Fall ohne erfindungsgemäße Korrektureinheit 5.

In der nachfolgenden Tabelle 1 sind die Radien und Abstände der einzelnen Fläche der Linsen L1 - L5 sowie der jeweilige Brechungsindex der verwendeten Linsenmaterialien angegeben.

Tabelle 1

| Fläche | Radien(mm) | Dicken/Distanzen zur nächsten Fläche (mm) | Brechungsindex (für 514,5nm) |
|---|---|---|---|
| 16 | ∞ | 27,464 | 1 |
| F1 | -33,4951 | 5,96 | 1,73004 |
| F2 | 12, 32 | 11,28 | 1,435962 |
| F3 | -12,32 | 27,109 | 1 |
| F4 | 10,903 | 4,07 | 1,612309 |
| F5 | 9,173 | 8,46 | 1 |
| F6 | ∞ | 10 | 1,52049 |
| F7 | ∞ | 44,02 | 1 |
| F8 | 86,5932 | 4,6 | 1,644665 |
| F9 | 24,938 | 1,725 | 1 |
| F10 | 28,184 | 9,63 | 1,501224 |
| F11 | -32,543 | 111,139 | 1 |
| 14 | | | |

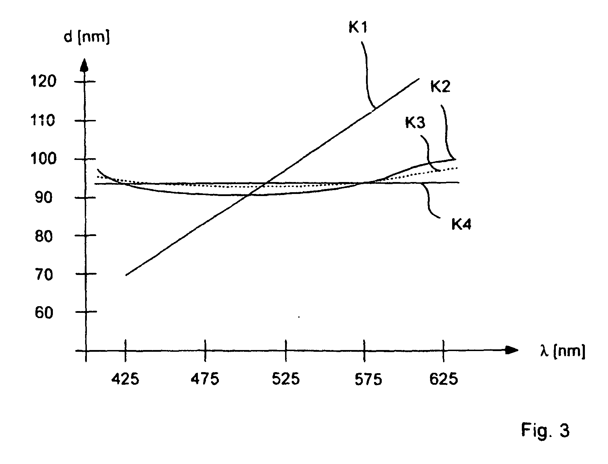

In Fig. 3 sind die Eindringtiefen bei der evaneszenten Beleuchtung für verschiedene Fälle dargestellt. Die Kurve K1 zeigt die Eindringtiefe in Abhängigkeit der Wellenlänge ohne erfindungsgemäße Korrektur. Die Kurve K2 zeigt die Eindringtiefen für die Ausführungsform von Fig. 1. Die gestrichelte Kurve K3 zeigt die Eindringtiefen für eine Korrekturoptik (nicht gezeigt), bei der eine Optimierung der Pupillenhöhen mit acht Wellenlängen zwischen 400 und 650 nm durchgeführt wurde. Eine solche Korrekturoptik weist im Vergleich zur Korrekturoptik 3 von Fig.1 eine zusätzliche Linse auf. Schließlich ist als Kurve K4 noch die wellenlängenunabhängige Eindringtiefe von 93 nm dargestellt.

Aus der Darstellung der Eindringtiefen läßt sich deutlich die erreichte Anpassung der Eindringtiefen ablesen.

**Patentansprüche**

1. Vorrichtung zum evaneszenten Beleuchten einer Probe, mit
einer eine Korrekturoptik (3) und ein dieser nachgeordnetes Objektiv (4) aufweisenden Beleuchtungsoptik, um die Probe (11) mit einem zugeführten Strahlenbündel (15), das optische Strahlung (S1, S2) mit mindestens zwei verschiedenen Wellenlängen enthält, evaneszent zu beleuchten,
wobei die Korrekturoptik (3) einen Farbquerfehler aufweist, der bei der Beleuchtung dazu führt, daß die optische Strahlung (S1, S2) die Pupille (14) des Objektives (4) in Abhängigkeit der Wellenlänge in unterschiedlichen Höhen durchläuft, und der so gewählt ist, daß der wellenlängenbedingte Unterschied der Eindringtiefen der Strahlung in die Probe (11) bei der evaneszenten Beleuchtung verringert ist, **dadurch gekennzeichnet, daß** die Korrekturoptik (3) zumindest ein refraktives Element (L1, L2, L3) in Form einer Linse zur Erzeugung des Farbquerfehlers aufweist, und daß eine Zuführeinheit, die das Strahlenbündel (15) der Korrekturoptik (3) außeraxial zuführt, vorgesehen ist.

**2.** Vorrichtung nach Anspruch 1, **dadurch gekennzeichnet, daß** die Korrekturoptik (3) eine zur Objektivpupille (14) konjugierte Ebene (16) aufweist, durch die das zugeführte Strahlenbündel (15) läuft.

**3.** Vorrichtung nach einem der obigen Ansprüche, **dadurch gekennzeichnet, daß** die Zuführeinheit das Strahlenbündel (15) der Korrekturoptik (3) so zuführt, daß es nicht parallel zur optischen Achse der Korrekturoptik (3) verläuft.

**4.** Verfahren zum evaneszenten Beleuchten einer Probe, mit einem Strahlenbündel, das optische Strahlung mit mindestens zwei verschiedenen Wellenlängen enthält, wobei
das Strahlenbündel über eine Korrekturoptik und ein dieser nachgeordnetes Objektiv so auf die Probe gerichtet wird, daß diese evaneszent beleuchtet wird,
wobei die Korrekturoptik einen Farbquerfehler aufweist, der bei der Beleuchtung dazu führt, daß die optische Strahlung die Pupille des Objektivs in Abhängigkeit der Wellenlänge in unterschiedlichen Höhen durchläuft, und der so gewählt wird, daß der wellenlängenbedingte Unterschied der Eindringtiefen der Strahlung in die Probe bei der evaneszenten Beleuchtung verringert wird,
**dadurch gekennzeichnet, daß** die Korrekturoptik mit zumindest einem refraktiven Element in Form einer Linse zur Erzeugung des Farbquerfehlers vorgesehen wird und daß das Strahlenbündel der Korrekturoptik außeraxial zugeführt wird.

**5.** Verfahren nach Anspruch 4, **dadurch gekennzeichnet, daß** die Korrekturoptik eine zur Objektivpupille konjugierte Ebene aufweist, durch die das zugeführte Strahlenbündel läuft.

**6.** Verfahren nach Anspruch 5, **dadurch gekennzeichnet, daß** das Strahlenbündel die optische Strahlung so enthält, daß es als koaxiales Strahlenbündel die konjugierte Ebene durchläuft.

**7.** Verfahren nach einem der Ansprüche 4 bis 6 **dadurch gekennzeichnet, daß** die Probe mit der optischen Strahlung mit den mindestens zwei Wellenlängen gleichzeitig beleuchtet wird.

**8.** Verfahren nach einem der Ansprüche 4 bis 7, **dadurch gekennzeichnet, daß** das Strahlenbündel der Korrekturoptik so zugeführt wird, daß es nicht parallel zur optischen Achse der Korrekturoptik verläuft.

## Claims

**1.** A device for the evanescent illumination of a sample, comprising a illumination optics provided with a correction optics (3) and an objective (4) arranged downstream from said correction optics in order to evanescently illuminate the sample (11) with a supplied ray bundle (15) containing optical radiation (S1, S2) with at least two different wavelengths, with the correction optics (3) having a transverse chromatic aberration which, during the illumination, leads to that the optical radiation (S1, S2) traverses the pupil (14) of the objective (4) at different heights according to the wavelength, and which is selected in such a way that the wavelength-related difference of the penetration depths of the radiation into the sample (11) is reduced during the evanescent illumination,
**characterized in that** the correction optics (3) comprises at least one refractive element (L1, L2, L3) in form of a lens to generate the transverse chromatic aberration and **in that** a feed unit is provided which feeds the ray bundle (15) to the correction optics (3) in an off-axis manner.

**2.** A device according to claim 1, **characterized in that** the correction optics (3) comprises a plane (16) conjugated to the objective pupil (14), with the supplied ray bundle (15) passing through said plane.

**3.** A device according to one of the preceding claims, **characterized in that** the feed unit feeds the ray bundle (15) to the correction optics (3) in such a way that it does not extend parallel to the optical axis of the correction optics (3).

**4.** A method for the evanescent illumination of a sample, comprising a ray bundle containing optical radiation with at least two different wavelengths, with the ray bundle being directed to a sample via a correction optics and an objective arranged downstream of the correction optics in such a way that it is illuminated evanescently,
with the correction optics having a transverse chromatic aberration which, during illumination, leads to that the optical radiation traverses the pupil of the objective at different heights according to the wavelength, and which is selected in such a way that the wavelength-related difference of the penetration depths of the radiation into the sample is reduced during the evanescent illumination, **characterized in that** the correction optics is provided with at least one refractive element in form of a lense to generate the transverse chromatic aberration and **in that** the ray bundle is fed to the correction optics in an off-axis manner.

5. A method according to claim 4, **characterized in that** the correction optics has a plane conjugated to the objective pupil, with the supplied ray bundle passing through said plane.

6. A method according to claim 5, **characterized in that** the ray bundle contains the optical radiation in such a way that it passes the conjugated plane as a coaxial ray beam.

7. A method according to one of the claims 4 to 6, **characterized in that** the sample is illuminated with the optical radiation with the at least two wavelengths simultaneously.

8. A method according to one of the claims 4 to 7, **characterized in that** the ray bundle is fed to the correction optics in such a way that it does not extend parallel to the optical axis of the correction optics.

**Revendications**

1. Dispositif pour l'éclairage évanescent d'un échantillon, comprenant une optique d'éclairage présentant une optique de correction (3) et un objectif (4) disposé en aval de celle-ci, afin d'éclairer de façon évanescente l'échantillon (11) avec un faisceau (15) amené, lequel contient du rayonnement (S1, S2) optique avec au moins deux longueurs d'onde différentes,
l'optique de correction (3) présentant une aberration chromatique latérale, qui aboutit lors de l'éclairage à ce que le rayonnement (S1, S2) optique traverse la pupille (14) de l'objectif (4) en fonction de la longueur d'onde à différentes hauteurs, et qui est choisie de telle sorte que la différence, due à la longueur d'onde, des profondeurs de pénétration du rayonnement dans l'échantillon (11) lors de l'éclairage évanescent est réduite,
**caractérisé en ce que** l'optique de correction (3) présente au moins un élément (L1, L2, L3) réfractif sous forme d'une lentille pour générer l'aberration chromatique latérale et **en ce qu'**une unité d'alimentation, qui amène le faisceau (15) à l'optique de correction (3) en dehors de l'axe, est prévue.

2. Dispositif selon la revendication 1, **caractérisé en ce que** l'optique de correction (3) présente un plan (16) conjugué par rapport à la pupille de l'objectif (14), plan par lequel passe le faisceau (15) amené.

3. Dispositif selon l'une des revendications susmentionnées, **caractérisé en ce que** l'unité d'alimentation amène le faisceau (15) à l'optique de correction (3) de telle sorte qu'il n'est pas agencé parallèlement à l'axe optique de l'optique de correction (3).

4. Procédé pour l'éclairage évanescent d'un échantillon, comprenant un faisceau, qui contient du rayonnement optique avec au moins deux longueurs d'ondes différentes,
le faisceau est dirigé sur l'échantillon par l'intermédiaire d'une optique de correction et d'un objectif placé en aval de celle-ci, de telle sorte que cet échantillon est éclairé de façon évanescente.
l'optique de correction présentant une aberration chromatique latérale qui, lors de l'éclairage, aboutit à ce que le rayonnement optique traverse la pupille de l'objectif en fonction de la longueur d'onde à différentes hauteurs, et qui est choisie de telle sorte que la différence, due à la longueur d'onde, des profondeurs de pénétration du rayonnement dans l'échantillon est réduite lors de l'éclairage évanescent,
**caractérisé en ce que** l'optique de correction dotée d'au moins un élément réfractif est prévue sous forme d'une lentille pour générer l'aberration chromatique latérale et **en ce que** le faisceau est amené à l'optique de correction en dehors de l'axe.

5. Procédé selon la revendication 4, **caractérisé en ce que** l'optique de correction présente un plan conjugué par rapport à la pupille de l'objectif, par lequel passe le faisceau lumineux amené.

6. Procédé selon la revendication 5, **caractérisé en ce que** le faisceau contient le rayonnement optique de telle sorte qu'un faisceau coaxial traverse le plan conjugué.

7. Procédé selon l'une des revendications 4 à 6, **caractérisé en ce que** l'échantillon est éclairé simultanément avec le rayonnement optique avec les au moins deux longueurs d'onde.

8. Procédé selon l'une des revendications 4 à 7, **caractérisé en ce que** le faisceau est amené à l'optique de correction de telle sorte qu'il n'est pas agencé parallèlement à l'axe optique de l'optique de correction.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040174523 A
- WO 2008009581 A1
- US 20050179903 A1